Europäisches Patentamt

European Patent Office

Office européen des brevets

(19)

(11) Veröffentlichungsnummer : **0 381 712 B1**

(12) **EUROPÄISCHE PATENTSCHRIFT**

(45) Veröffentlichungstag der Patentschrift :
04.03.92 Patentblatt 92/10

(21) Anmeldenummer : 89906698.9

(22) Anmeldetag : 20.06.89

(86) Internationale Anmeldenummer :
PCT/CH89/00115

(87) Internationale Veröffentlichungsnummer :
**WO 90/01148 08.02.90 Gazette 90/04**

(51) Int. Cl.⁵ : **G01G 3/16**

(54) **MASSEN- UND KRAFTMESSER MIT ELASTISCHER UNTERSETZUNG.**

(30) Priorität : **18.07.88 CH 2759/88**

(43) Veröffentlichungstag der Anmeldung :
**16.08.90 Patentblatt 90/33**

(45) Bekanntmachung des Hinweises auf die
Patenterteilung :
**04.03.92 Patentblatt 92/10**

(84) Benannte Vertragsstaaten :
**CH DE FR GB IT LI NL SE**

(56) Entgegenhaltungen :
**EP-A- 0 025 807**
**EP-A- 0 071 652**
**DE-U- 8 633 612**
**FR-A- 2 176 800**

(73) Patentinhaber : **WIRTH GALLO MESSTECHNIK
AG**
**Sonnenbergstrasse 55**
**CH-8032 Zürich (CH)**

(72) Erfinder : **WIRTH, Johannes**
**Sonnenbergstr. 55**
**CH-8032 Zürich (CH)**
Erfinder : **KNÜSLI, Max**
**Stallikerstr. 4**
**D-8142 Uitikon (CH)**

(74) Vertreter : **Salgo, Reinhold Caspar, Dr.**
**Patentanwalt Aretshalde 160**
**CH-8607 Aathal (CH)**

EP 0 381 712 B1

Jouve, 18, rue Saint-Denis, 75001 PARIS

## Beschreibung

Vorliegende Erfindung betrifft einen Massen- und Kraftmesser mit einer querschwingenden Saite und elastischer Untersetzung der Eingangskraft. Solche Massen- und Kraftmesser sind bekannt, beispielsweise aus dem DE Gbm 86 33 612.6.

In dieser bekannten Vorrichtung wird die zu messende Eingangskraft durch eine elastische Parallelführung, gebildet aus zwei dicken und zwei dünnen Biegefedern, untersetzt. Die dünnen Biegefedern tragen etwa in ihrer Mitte je eine Stütze, die ihrerseits einen Befestigungskopf für die querschwingende Saite trägt. Die ganze, aus dem DE Gbm 86 33 612.6 bekannte Vorrichtung ist aus einem einzigen Stück gefertigt. Der Nachteil dieser bekannten Anordnung liegt darin, dass die die Saitenbefestigungsköpfe tragenden Stützen bei Einleitung der zu messenden Eingangskraft eine Biegungsbeanspruchung erfahren, wodurch die Saitenbefestigungsköpfe eine Nickbewegung durchführen. Damit erfährt einerseits die querschwingende Saite in ihren Endregionen eine Biegebelastung, anderseits erfährt die Längendefinition der Saite eine Störung, da der obere und der untere Rand der Saite nicht mehr genau übereinander stehen.

Die der Erfindung zugrundeliegende Aufgabe besteht in der Schaffung einer den Saitenbefestigungskopf tragenden Stütze, die die geschilderten Nachteile vermeidet und bewirkt, dass die Saitenbefestigungsköpfe sich nur parallel versetzen können.

Die Lösung der gestellten Aufgabe ist wiedergegeben im Patentanspruch 1. Anhand der beiliegenden Zeichnung wird die Erfindung näher erläutert.

Es zeigen

Fig. 1 die bekannte Vorrichtung unter Belastung,

Fig. 2a,b ein erstes erfindungsgemässes Ausführungsbeispiel mit zwei parallelen Stützen für jeden Saitenbefestigungskopf,

Fig. 3a,b ein zweites erfindungsgemässes Ausführungsbeispiel mit abgekröpften Stützen,

Fig. 4a,b ein drittes erfindungsgemässes Ausführungsbeispiel mit einer geraden und einer abgekröpften Stütze,

Fig. 5a,b ein viertes erfindungsgemässes Ausführungsbeispiel mit zwei ein Trapez bildenden Stützen,

Fig. 6a,b eine Variante zu Fig. 2.

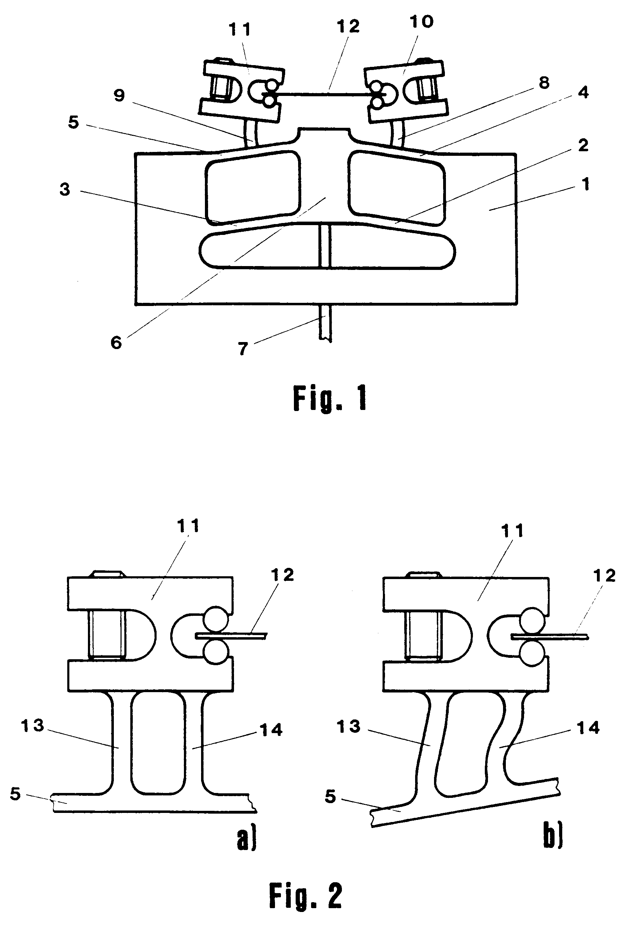

in Fig. 1 ist der bekannte Kraftmesser unter Belastung dargestellt. An einem - auf einer nicht gezeichneten Plattform festgeschraubten - Gestell 1 sind zwei dicke Blattfedern 2,3 und zwei dünnere Blattfedern 4,5 befestigt. Alle vier Blattfedern 2 bis 5 sind ferner an einem zentralen Block 6 befestigt, auf den mittels einer Stelze 7 die zu messende Kraft aufgebracht wird. Die dünneren Blattfedern 4,5 tragen etwa in ihren Mitten je eine Stütze 8,9, die ihrerseits je einen Saitenbefestigungskopf 10,11 tragen. Alle Teile 1 bis 11 sind gemäss der bekannten Vorrichtung aus einem Stück gefertigt. Die unterschiedliche Härte der Blattfedern 2,3 einerseits, und 4,5 anderseits, kann jedoch auch durch andere Mittel, wie beispielsweise unterschiedliche Länge, verschiedenes Material oder andere Gestaltung der Biegegelenke bewirkt werden. Zudem ist es weder für die Funktion der bekannten Vorrichtung, noch für die vorliegende Erfindung notwendige Voraussetzung, dass die Blattfedern 4, 5 weicher sind, als die Blattfedern 2, 3. Zwischen den Saitenbefestigungsköpfen 10,11 ist eine querschwingende Saite 12 eingespannt; die notwendige Anregungsvorrichtung ist der Klarheit der Zeichnung wegen weggelassen. Die Darstellung von Fig. 1 zeigt beispielsweise - in stark überhöhtem Masse - wie die Stützen 8,9 unter dem Einfluss der die Saite 12 spannenden Kraft eine Biegung erfahren, und die Saitenbefestigungsköpfe 10,11 eine Nickbewegung ausführen. Ist die Nachgiebigkeit der Saite 12 jedoch grösser als diejenige der Stützen 8,9, so geht die Nickbewegung der Saitenbefestigungsköpfe in die andere Richtung. Dies führt zu den geschilderten Nachteilen der bekannten Vorrichtung.

Fig. 2a,b, zeigt den Saitenbefestigungskopf 11 mit der Saite 12 (angebrochen) nun auf zwei zueinander parallelen Stützen 13,14. In Fig. 2a wirken nur die Vorlasten, um der Saite 12 die notwendige Vorspannung zu erteilen. In Fig. 2b ist eine zu messende Kraft, beispielsweise über die Stelze 7, eingeleitet worden. Anstelle der Stelze 7 ist auch ein (in der Fig. 1 nicht gezeichneter) Zugdraht oder andere, an sich bekannte Mittel im Sinne der Erfindung möglich.

Alle Verformungen sind in diesem, sowie den nachfolgenden Ausführungsbeispielen, wiederum stark überhöht dargestellt. Durch die zu messende Kraft wird die Blattfeder 5 in ihrem Mittelteil, der die Stützen 13,14 trägt, im Gegenuhrzeigersinn (gemäss der Darstellung von Fig. 2) verdreht. Durch die Zugkraft der Saite 12 wirkt auf die Stütze 13 eine erhöhte Zugkraft, auf die Stütze 14 eine Druckkraft, jeweils zusätzlich zur Biegebeanspruchung. Durch geeignete relative Dimensionierung der Stützen 13,14 kann erzielt werden, dass der Saitenbefestigungskopf 11 nur eine Versetzung parallel zu sich selbst erfährt.

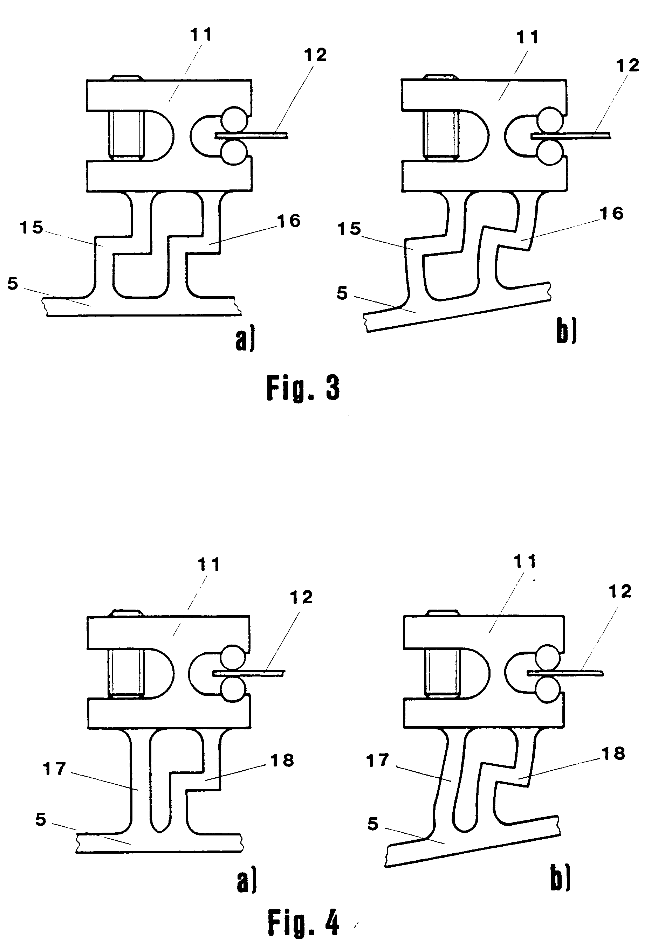

Das Ausführungsbeispiel gemäss Fig. 3a,b weist zwei abgekröpfte Stützen 15,16 auf, die durch geeignete Dimensionierung allenfalls unterschiedlich biegeweich gemacht werden können, dergestalt, dass sich der Saitenbefestigungskopf 11 wiederum nur parallel zu sich selbst versetzt. Erzielt wird dieser Erfolg durch die angemessene Einfederung der Stützen 15,16.

In einer nicht gezeichneten Variante zur Fig. 3 ist die Stütze 16 so gestaltet, dass die Abkröpfung nach rechts gewendet ist. Damit gerät die Befestigungsstelle der Stütze 16 an der Blattfeder 5 nach rechts, während diejenige am Saitenbefestigungskopf 11 dort bleibt, wie in Fig. 3 gezeichnet. Ebenfalls erfindungsgemäss ist es, die Abkröpfung der Stütze 15 auf die andere Seite zu bringen, dergestalt, dass die Befestigungsstellen an der Blattfeder 5 näher beieinander liegen, als am Saitenbefestigungskopf 11.

In Fig. 4 ist ein drittes Ausführungsbeispiel dargestellt. Hier wird der Saitenbefestigungskopf 11 getragen von zwei Stützen 17,18. Die Stütze 17 ist gerade, die Stütze 18 ist abgekröpft. Durch die Abmessungen der Stützen 17, 18 können deren Biegehärten in grossem Bereich absolut und relativ zueinander variiert werden. Wiederum nicht gezeichnet ist eine Variante, bei der die Abkröpfung der Stütze 18 auf die andere Seite angeordnet ist, dergestalt dass die Befestigungsstellen der Stützen auf der Blattfeder 5 weiter auseinander liegen als am Saitenbefestigungskopf 11. Eine weitere, nicht gezeichnete Variante besteht darin, die beiden Stützen 17,18 zu vertauschen, so dass die gerade Stütze 17 rechts, die abgekröpfte Stütze 18 links zu stehen kommt.

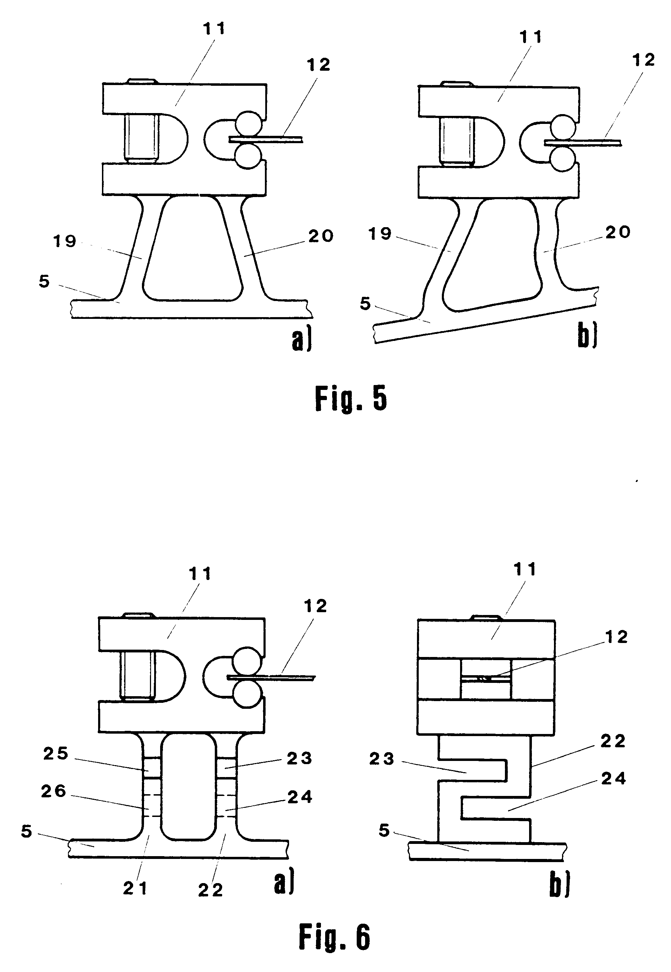

Im Ausführungsbeispiel gemäss Fig. 5a,b sind zwei Stützen 19,20 so angeordnet, dass sie zusammen mit der Blattfeder 5 und dem Saitenbefestigungskopf 11 ein Trapez bilden. Das Trapez kann beispielsweise symmetrisch sein, wie gezeichnet, jedoch auch asymmetrisch in dem Sinne, dass eine der Stützen 19,20 länger ist als die andere, unter Wahrung der Parallelität von Saitenbefestigungskopf 11 und Blattfeder 5. Die Stützen 19,20 sind hier wiederum gestreckt ausgebildet. Durch die Wahl der Stärke der Stützen 19,20 können hier wiederum deren Biegehärten absolut und relativ zueinander gewählt werden, mit dem erfindungsgemässen Ziel, dass die bei Einleitung der zu messenden Kraft erfolgende Versetzung des Saitenbefestigungskopfes 11 nur parallel zu sich selbst erfolgt. Nicht gezeichnet ist eine Variante zu Fig. 5. Sie besteht darin, dass die Basis des genannten - symmetrischen oder asymmetrischen - Trapezes zum Saitenbefestigungskopf 11 zu liegen kommt, und seine kürzere Seite sich auf der Blattfeder 5 befindet.

Das Ausführungsbeispiel gemäss Fig. 6 beruht zunächst auf jenem gemäss Fig. 2. Hier sind jedoch zwei ursprünglich gerade und parallele Stützen 21,22 mit je zwei entgegengesetzten und versetzten Schlitzen 23,24, bwz. 25,26 versehen. Durch Variation der Materialstärke der Stützen 21,22, der Tiefe und Breite der Schlitze 23 bis 26 und deren gegenseitigen Abstandes kann in breiten Grenzen jedes Verhältnis der Biegehärten der Stützen 21,22 erzielt werden.

Die Fig. 6a zeigt den Saitenbefestigungskopf 11 mit Stützen 21,22 in der gleichen Ansicht, wie durch die Fig. 1 bis 5 gegeben: Fig. 6b zeigt ihn in der Richtung und von der Stütze 12 aus. Hier ist nur die Stütze 22 mit Schlitzen 23,24 abgebildet. Was hier durchwegs nur für die Blattfeder 5, den Saitenbestigungskopf 11 und die ihn tragenden Stützen 13 bis 22 beschrieben wurde, gilt selbstverständlich auch spiegelbildlich für die Blattfeder 4 und den Saitenbestigungskopf 10. Die dazugehörigen Stützen sind jeweils spiegelsymmetrisch zu den Stützen 13 bis 22 und würden, wenn gezeichnet, die gleichen Bezugsziffern tragen wie die beschriebenen.

In zwei nicht gezeichneten Varianten zu Fig. 6 trägt nur die Stütze 21 zwei Schlitze 25,26 oder nur die Stütze 22 zwei Schlitze 23,24. Ebenfalls erfindungsgemäss ist es, die Schlitze 23,24 und/oder die Schlitze 25,26 an den Stützen 17, 19, und/oder 20 gemäss Fig. 5 anzubringen.

## Patentansprüche

1. Massen- und Kraftmesser mit einer querschwingenden Saite (12) und elastischer Untersetzung der Eingangskraft, bestehend aus einem Gestell (1) mit zwei übereinander angeordneten Paaren unterschiedlich harter Blattfedern (2,3; 4,5) und einem zentralen Block (6), Mitteln (7) zum Aufbringen der zu messen- den Kraft auf den zentralen Block (6) und zwei im wesentlichen in der Mitte der oberen Blattfedern (4,5) befestigen Saitenbefestigungsköpfen (10,11), zwischen denen die querschwingende Saite (12) eingespannt ist, dadurch gekennzeichnet, das die Saitenbefestigungsköpfe (10,11) durch je zwei hintereinander angeordnete Stützen (13,14;15;16;17,18;19,20;21,22) getragen sind.

2. Massen- und Kraftmesser nach Patentanspruch 1, dadurch gekennzeichnet, dass die Stützen (13,14) gerade und untereinander parallel sind.

3. Massen- und Kraftmesser nach Patentanspruch 2, dadurch gekennzeichnet, dass die geraden Stützen (13,14) mit je zwei entgegengesetzen und versetzten Schlitzen (23,24;25,26) versehen sind.

4. Massen- und Kraftmesser nach Patentanspruch 2, dadurch gekenn.zeichnet, dass eine der geraden Stützen (13,14) mit entgegengesetzten und versetzten Schlitzen (23,24;25,26) versehen ist.

5. Massen- und Kraftmesser nach Patentanspruch 1, dadurch gekennzeichnet, dass je zwei Stützen (17,18) vorhanden sind, von denen die eine gerade, die andere abgekröpft ist.

6. Massen- und Kraftmesser nach Patentanspruch 1, dadurch gekennzeichnet, dass je zwei abgekröpfte Stützen (15,16) vorhanden sind.

7. Massen- und Kraftmesser nach Patentanspruch 1, dadurch gekennzeichnet, dass je zwei gerade Stützen (19,20) vorhanden sind, deren. Richtungen mit derjenigen der Blattfeder (15) und derjenigen des Saitenbefestigungskopfes (10,11) ein Trapez bilden.

8. Massen- und Kraftmesser nach Patentanspruch 7, dadurch gekennzeichnet, dass das genannte Trapez symmetrisch ist, die Stützen (19,20) also gleich lang sind.

9. M.assen- und Kraftmesser nach Patentanspruch 7, dadurch gekennzeichnet, dass das genannte Trapez asymmetrisch ist, die Stützen (19,20) also von unterschiedlicher Länge sind.

10. Massen- und Kraftmesser nach Patentanspruch 7, dadurch gekennzeichnet, dass mindestens eine der Stützen (19,20) mit je zwei entgegengesetzten und versetzten Schlitzen (23,24;25,26) versehen ist.

11. Massen- und Kraftmesser nach Patentanspruch 5, dadurch gekennzeichnet, dass die gerade Stütze (17) mit zwei entgegengesetzten und versetzten Schlitzen (23, 24) versehen ist.


## Claims

1. A mass and force meter comprising a transversely vibrating chord (12) and elastic reduction of the input force and comprising a frame (1) with two superposed pairs of leaf springs (2, 3; 4, 5) of differing hardness and a central block (6), means (7) whereby the force to be measured is applied to the central block (6), and two chord-securing heads (10, 11) secured substantially to the middle of the upper leaf springs (4, 5) and between which the transversely vibrating chord (12) is tensioned, characterised in that the chord-securing heads (10, 11) are each mounted on two successive supports (13, 14; 15, 16; 17, 18; 19, 20; 21, 22).

2. A mass and force meter according to claim 1, characterised in that the supports (13, 14) are straight and parallel to one another.

3. A mass and force meter according to claim 2, characterised in that the straight supports (13, 14) are each formed with two opposite offset slots (23, 24; 25, 26).

4. A mass and force meter according to claim 2, characterised in that one of the straight supports (13, 14) is formed with opposite offset slots (23, 24; 25, 26).

5. A mass and force meter according to claim 1, characterised in that in each case, two supports (17, 18) are provided, one straight and the other bent at right angles.

6. A mass and force meter according to claim 1, characterised in that in each case, two supports (15, 16) bent at right angles are provided.

7. A mass and force meter according to claim 1, characterised in that in each case, two straight supports (19, 20) are provided and their directions co-operate with those of the leaf spring (15) and those of the chord securing head (10, 11) to form a trapezium.

8. A mass and force meter according to claim 7, characterised in that the aforementioned trapezium is symmetrical, i.e. the supports (19, 20) are of equal length.

9. A mass and force meter according to claim 7, characterised in that the aforementioned trapezium is asymmetrical, i.e. the supports (19, 20) are of differing length.

10. A mass and force meter according to claim 7, characterised in that at least one of the supports (19, 20) is formed with two pairs of opposite offset slots (23, 24; 25, 26).

11. A mass and force meter according to claim 5, characterised in that the straight support (17) is formed with two opposite offset slots (23, 24).


## Revendications

1. Dispositif de mesure de masse et de force à corde (12) vibrant transversalament et à réduction élastique de la force d'entrée, formé d'un bâti (1) comportant deux paires superposées de ressorts à lames (2, 3 ; 4, 5) de duretés différentes et un bloc central (6), de moyens (7) destinés à appliquer la force à mesurer au bloc central (6), et de deux têtes de fixation de corde (10, 11), qui sont fixées sensiblement au milieu des ressorts à lames supérieurs (4, 5) et entre lesquelles est tendue la corde (12) à vibration transversale, caractérisé en ce que les têtes de fixation de corde (10, 11) sont portées par deux supports respectifs (13, 14 ; 15, 16 ; 17, 18 ; 19, 20 ; 21, 22) disposés l'un derrière l'autre.

2. Dispositif de mesure de masse et de force selon la revendication 1, caractérisé en ce que les supports (13, 14) sont droits et parallèles l'un par rapport à l'autre.

3. Dispositif de mesure de masse et de force selon la revendication 2, caractérisé en ce que les supports droits (13, 14) sont pourvus chacun de deux fentes opposées et décalées (23, 24 ; 25, 26).

4. Dispositif de mesure de masse et de force selon la revendication 2, caractérisé en ce que l'un des supports droits (13, 14) est pourvu de fents opposées et décalées (23, 24 ; 25, 26).

5. Dispositif de mesure de masse et de force selon la revendication 1, caractérisé en ce qu'il est prévu respectivement deux supports (17, 18) dont l'un est droit et l'autre coudé.

6. Dispositif de mesure de masse et de force selon la revendication 1, caractérisé en ce qu'il est prévu respectivement deux supports coudés (15, 16).

7. Dispositif de mesure de masse et de force selon la revendication 1, caractérisé en ce qu'il est prévu respectivement deux supports droits (19, 20) dont les orientations définissent un trapèze avec celle du ressort à lames (15) et celle de la tête de fixation de corde (10, 11).

8. Dispositif de mesure de masse et de force selon la revendication 7, caractérisé en ce que ledit trapèze est symétrique et les supports (19, 20) ont par conséquent la même longueur.

9. Dispositif de mesure de masse et de force selon la revendication 7, caractérisé en ce que ledit trapèze est asymétrique et les supports (19, 20) ont par conséquent des longueurs différentes.

10. Dispositif de mesure de masse et de force selon la revendication 7, caractérisé en ce que l'un au moins des supports (19, 20) est pourvu respectivement de deux fentes opposées et décalées (23, 24 ; 25, 26).

11. Dispositif de mesure de masse et de force selon la revendication 5, caractérisé en ce que le support droit (17) est pourvu de deux fentes opposées et décalées (23, 24).

Fig. 1

a) b)

Fig. 2

**Fig. 3**

**11**

**12**

**15**

**16**

**5**

**a)**

**b)**

**Fig. 4**

**11**

**12**

**17**

**18**

**5**

**a)**

**b)**

**Fig. 5**

**Fig. 6**